# EUROPEAN PATENT SPECIFICATION

(11) **EP 1 684 369 B1**
(45) Date of publication and mention of the grant of the patent: **02.03.2016**
(21) Application number: 05111307.4
(22) Date of filing: 25.11.2005
(51) Int. Cl.: C22B 3/46, C22B 7/00, C22B 19/30, C22B 47/00, H01M 4/24, H01M 4/29, H01M 6/00, H01M 6/50, H01M 4/28, H01M 6/52

(54) **Process and plant for the treatment of run-down batteries**
Prozess und Anlage zur Behandlung von verbrauchten Batterien
Procédé et installation pour le traitement des batteries usées

(30) Priority: 25.11.2004 IT RM20040578
(43) Date of publication of application: 26.07.2006
(73) Proprietor: Universita'Degli Studi di Roma "La Sapienza", 00185 Roma (IT)
(72) Inventor: Toro, Luigi, 00135 Roma (IT); Veglio', Francesco, 67100 Santa Rubina (IT); Beolchini, Francesca, 60035 Jesi (IT); Pagnanelli, Francesca, 00050 Cerveteri (IT); Zanetti, Mariachiara, 10133 Torino (IT); Furlani, Giuliana, 00139 Roma (IT)
(74) Representative: Raimondi, Adriana

(56) References cited:
- EP-A- 0 158 627
- EP-A- 0 620 607
- EP-A- 1 148 571
- WO-A-94/02265
- WO-A-95/30626
- WO-A-03/029148
- FR-A- 2 827 710
- PATENT ABSTRACTS OF JAPAN vol. 011, no. 124 (C-416), 17 April 1987 (1987-04-17) & JP 61 261443 A (NIPPON MINING CO LTD), 19 November 1986 (1986-11-19)
- "Utilisation of household exhausted dry electrochemical batteries - consists of mechanical and hydrometallurgical treatments to recover zinc and other metals" DERWENT, 13 June 1997 (1997-06-13), XP002172029

## Description

### Field of the invention

The present invention relates to a process for the treatment of run-down batteries. In particular the invention concerns a *zero-waste* process for the recovery of flat alkaline batteries, aimed at the production of new batteries that can be defined as *green*, in which *zero-waste* means that at the end of the recycling process all the products and by-products deriving from the various stages of the treatment are either re-used within the plant or employed for alternative uses and there is no end waste.

The vast majority of batteries currently sold on the market are of the so-called "dry" type; in these batteries the electrodes are not submerged in a solution but in an inert solid support impregnated with electrolytic liquid. The present invention relates to the treatment of dry batteries of the zinc-carbon and alkaline type, from which it is possible to recover, in particular, Zn and Mn.

### Background art

In recent years there has been a growing interest in processes for the treatment of flat batteries, due to the obvious problems of environmental impact connected with the presence of significant quantities of heavy metals. Batteries, in fact, are considered special waste and by law must be disposed of in controlled refuse dumps; this type of disposal entails high costs for the community. Conversely, it is the metal content that makes flat batteries an interesting source of raw materials. The literature describes various methods for the recovery of heavy metals from flat batteries. Said processes are essentially of two types: pyrometallurgical or hydrometallurgical.

The pyrometallurgical processes perform selective volatilisation of the metals at high temperatures, followed by a condensation phase. Said processes are characterised by high costs.

The hydrometallurgical processes are characterised by lower energy consumption and lower environmental impact with respect to the pyrometallurgical processes. There is plenty of scope for improvement within these processes.

The various hydrometallurgical processes are all characterised by pre-treatment aimed at classification, disassembly and magnetic separation of the various components. Subsequently a leaching operation is performed with sulphuric acid and a reducing agent. The various processes are distinguished by the reducing agent employed and by the methods for recovery of the various metals from the liquid bath used for the treatment, also called *liquor leach*. Table 1 shows the main characteristics of the hydrometallurgical processes used industrially and the related drawbacks. In the BATENUS Process, developed to treat all types of batteries (except for the button type containing mercury, which are sent to another recovery process) the copper, nickel and cadmium are selectively separated by ion exchange, the zinc present in the liquid phase is separated by liquid-liquid extraction and then recovered by electrodeposition, and the manganese dioxide is obtained by electrodeposition. In the RECUPYL process the zinc and manganese are recovered as salts. In the REVABAT process, by Revatech, zinc and manganese are recovered as sulphates.

The Batenus process uses SO₂ as the reducing agent and is therefore potentially polluting, furthermore it is excessively complex since it is intended to recover metals present in negligible quantities. The other processes, if the reducing agent used is iron, have the drawback of producing red mud (trivalent Fe) which is highly polluting, furthermore the end products are in a form that cannot be directly used for the production of batteries.

The process proposed here differs from the others because:
- the leaching is performed either in one single phase or in two successive phases so that the first leach (acid leaching) contains all the zinc and part of the manganese and the second leach (acid-reducing leaching) contains only the manganese;
- carbohydrates are used as reducing agents;
- the reducing agents used are not polluting;
- since the batteries treated are only of the alkaline type, metals other than zinc and manganese present only as impurities can be removed by simple cementation;
- the process provides for the production of manganese dioxide both chemically (CMD - chemical manganese dioxide) and electrochemically (EMD - electrochemical manganese dioxide);
- it is a process for total recovery of the battery components aimed at the production of new batteries.

**Table 1- Processes of the known art and process proposed: main characteristics and drawbacks**

| Process | Battery type | Pre-treatment | | | Leaching | | Recovery metals | Recovery Mn | Drawbacks |
|---|---|---|---|---|---|---|---|---|---|
| | | Grinding | Separation | Washing | Type | Reagents | | | |
| BATENUS WO9402265 | all except button type | cryogenic, with liquid nitrogen | Magnetic | deionised water | Acid-reducing | sulphuric acid SO₂ | Hg, Cu, Ni, Cd-ion exchange | Electrodeposition | Pollutant (use of SO₂) Excessively complex (metals other than Zn and Mn present in negligible quantities) |
| | | (T <-100°C) | | | | | Zn-Electrodeposition | | |
| RECUPYL WO03021708 | all | cryogenic, with air enriched with gaseous nitrogen | Magnetic | alkaline | Acid-reducing | sulphuric acid H₂O₂/iron filings | Zn - carbonate or oxide | sulphate or carbonate for EMD prod. | Production of red mud - trivalent iron End products cannot be used directly in production of batteries |
| REVABAT/ REVATECH EP1148571 | alkaline | at room temperature | Magnetic | alkaline | Acid-reducing | sulphuric acid H₂O₂/ iron filings | ZnSO₄ | MnSO₄ | End products cannot be used directly in production of batteries |
| Process of invention | | air | Magnetic | water | Acid-reducing | sulphuric or nitric acid/ carbohydra tes | Zn Electrodeposition | CMD | |
| | alkaline | | | | | | | EMD | |

### Brief description of the Figures

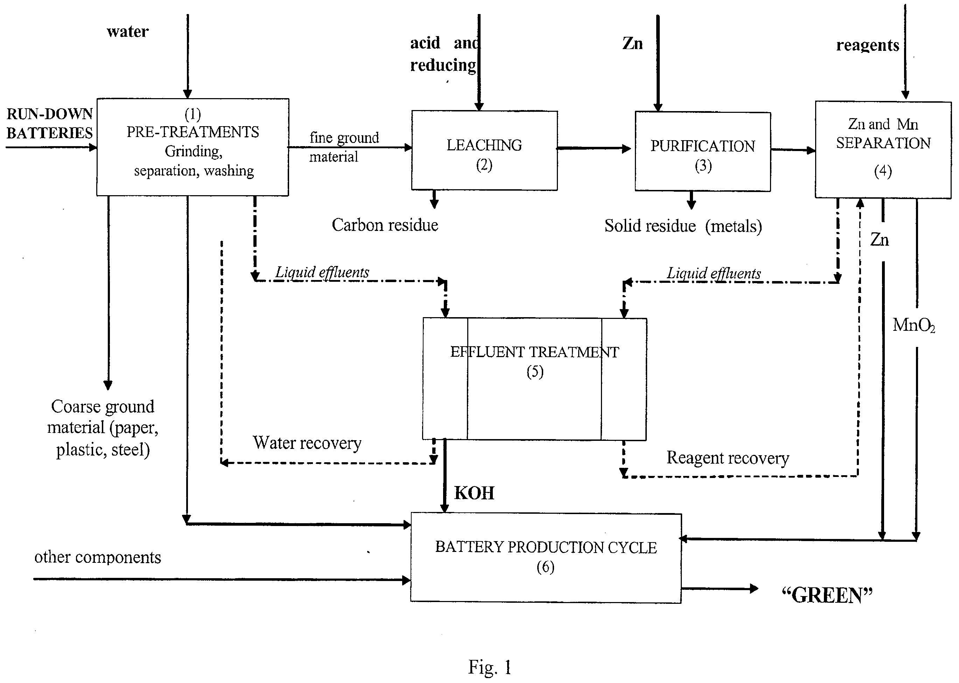

Fig. 1 shows schematically the process and the plant sections according to the invention.

### Summary of the invention

It is an object of the present invention a process for the treatment of flat alkaline batteries which provides for the recovery of material, especially in terms of zinc and manganese, for the production of new batteries. It is a hydrometallurgical type process comprising the following stages, shown schematically in Fig. 1:
- Pre-treatment (1) of the batteries comprising in succession the phases of grinding and separation of two fractions: one coarse and one fine. In this stage steel, non-ferrous metals, paper and plastic are separated from a fine ground powder which undergoes the subsequent treatments, after washing for separation and recovery of the electrolytic solution contained in the batteries.
- Acid-reducing (2) leaching in one single stage or preferably in two stages, using as reducer a carbohydrate chosen from the group comprising monosaccharides, oligosaccharides, polysaccharides and corresponding mixtures.
- Purification (3) by cementation (optional).
- Separation (4) and recovery of metallic zinc and MnO₂ in forms that can be re-used to produce new batteries.
- Treatment of the solutions to be re-circulated (5) by operations preferably using a membrane (nanofiltration, osmosis and/or electrodialysis) for the recovery of reagents and water.

A further stage consisting of the production of batteries (6) can be scheduled, according to conventional processes, based on the zinc and manganese dioxide obtained at the end of the separation stage (4), the steel deriving from the pretreatments (1) and the electrolyte, typically KOH, deriving from treatment of the waste (5). The process also produces materials in a form that can be re-used outside or within the process itself. A detailed description of each phase of the process is given below.

### Detailed description of the invention

The process according to the invention applies to so-called primary batteries, i.e. non-rechargeable, containing zinc and manganese as essential electrochemical components (or batteries the electrochemical operation of which is based on Zn and MnO₂), in particular alkaline batteries the electrolyte of which is generally substantially a solution of KOH which impregnates a mainly carbon type support. The process excludes the treatment of button batteries, i.e. zinc/air batteries or Ag oxide batteries which contain Zn (or Ag) and non-negligible quantities of nickel and copper but do not contain manganese.

Unless otherwise indicated, the process phases and the related operating conditions and corresponding implementation devices for production of the plant are within the capacity of a person skilled in the art who, together with the present description, is able to carry out the invention and produce the corresponding plant. The process of the invention comprises, in a relationship of cooperation, the stages detailed below (hereinafter "stage" or "section" are used as synonyms).

### (1) Pre-treatment stage

The alkaline batteries undergo crushing or comminution in order to obtain release of the constituents, including: ferrous metals, non-ferrous metals, paper and/or cellulose, plastic, zinc and manganese oxide. The crushing can be performed at room temperature or, alternatively, in a cryogenic chamber cooled generally by means of cold air in a temperature range typically from -30° to -110 °C. The comminution operation is performed by means of conventional crushers, e.g. impact or roller. The crushed product is riddled, generally by sifting, to the dimension of approximately 1.2-1.6 mm, preferably approximately 1.5 mm, in order to obtain separation of the coarse fraction from the finer fraction.
(1.1) The coarse fraction (d> 1.2 - 1.6 mm) undergoes the following operations:
   - magnetic separation (e.g. by means of induced roll magnetic separator) for recovery of the steel;
   - washing of the magnetic fraction with water, said water being added to the water used for washing the fine fraction;
   - electric separation (e.g. via induced current separator) for recovery of the non-ferrous metals (e.g. brass and copper);
   - what remains of the two separations consists substantially of cellulose and/or paper and plastic.
   The products of the various separation phases can be re-used as follows:
   - cellulose and/or paper and plastic for the production of fuel from waste
   - steel for the production of steel sheet for new batteries or for other industrial uses such as iron metallurgy applications
   - non-ferrous metals for other industrial uses.
(1.2) The fine fraction (particles smaller than 2 mm) is washed with water for recovery of the electrolyte, generally KOH, for the production of new batteries or within the pH adjustment process. The fine fraction can also undergo magnetic separation for recovery of the steel which is re-combined with the recovered material deriving from the coarse fraction.

The fine fraction, separated from the washing water, is sent to the next stage (2) for leaching, while the washing water, combined with the washing water of the magnetic fraction, is sent to stage (5) for treatment of the solutions to be re-circulated.

### (2) Leaching stage

The ground material deriving from the washing with water undergoes a process of acid-reducing leaching, performed in reactors, preferably under agitation, to recover the manganese and the zinc. The acid used can be sulphuric acid or nitric acid, preferably sulphuric acid. The recommended concentration value is pH≤1. The reducing agent is chosen from the group of monosaccharides, oligosaccharides, polysaccharides and corresponding mixtures. The term monosaccharides indicates any polyhydroxylated ketone or aldehyde comprising from 3 to 7 carbon atoms and corresponding derivatives, for example compounds in which the CHOH group has been substituted by the CH₂ group. Glucose, fructose, mannose and galactose are preferred and in general hexose, pentose and triose sugars, which may come from polysaccharide hydrolysis processes. The term oligosaccharide indicates any carbohydrate comprising from 2 to 10 units of monosaccharide, linked by glycosidic bonds. Preferably they are lactose, cellobiose, sucrose and maltose. The term polysaccharide indicates a carbohydrate comprising over 10 units of monosaccharide. Cellulosic products in general, such as paper mill residues, molasses, starch, whey, olive vegetation water and related products of any hydrolysis are preferred.

From what is indicated above, production waste from the agroindustrial sector and the paper industry, which is highly polluting and difficult to dispose of, can therefore be advantageously used as reducing agents.

The recommended reagent values for performing the leaching are: for leaching 100g of ground material, from 0.25 to 0.5 moles per litre of CHOH carbohydratic unit, approximately 1 l of acid with conc. from 1M to 3M.

The washed ground material is dispersed by agitation in the leaching solution, consisting substantially of acid, preferably sulphuric acid; subsequently the reducing agent can be added. The temperature is kept preferably above 50°C, more preferably at 80-90°C to accelerate the process; in particular the range 70-90°C is preferred. At the end of the reduction (generally after approximately 3-6 hours)n the final solution contains zinc and manganese in an ionic form and their recovery is practically total. A solid carbon residue is also formed which is separated from the solution by filtering and can be used for the production of fuel from waste or in the production of new batteries.

The leaching is preferably performed in two phases: a first acid leaching and a second acid-reducing leaching, as described below. The washed ground material obtained from the pre-treatment stage (1) is first treated with the acid only (same conditions as the single-stage leaching excluding the reducing agent) obtaining a first solution containing zinc and part of the Mn, both in an ionic form (Mn in general as a bivalent ion deriving from the bivalent manganese present in the ground material). The solid residue is separated and treated with acid and reducing agent in the same conditions as those previously described for the single-stage leaching to obtain a second solution containing the manganese present in the ground material, in its most oxidised form. The leaching in two stages therefore generates a first solution containing all the zinc and part of the manganese in concentrations such that it can be treated directly by means of electrodeposition for the production of metallic Zn and MnO₂ (also called EMD), and a second solution containing only manganese from which MnO₂ can be obtained via a chemical (CMD) or electrochemical (EMD) process.

Alternatively the solid residue is simply washed with water, dried and directly sent to the battery production cycle. This residue consists mainly of MnO₂ and carbon. Also for the two-stage process the solid carbon residue is separated by filtration from the reducing solution and can be used for the production of fuel from waste or in the production of new batteries.

### (3) Purification stage of the solution containing manganese and zinc salts

The solution resulting from the single-stage leaching or the first solution resulting from the two-stage leaching (i.e. the solutions resulting from leaching that contain both zinc and manganese) can undergo cementation by adding metallic zinc to eliminate any metals more electropositive than the zinc that may be present, which precipitate by reduction and are removed in general by filtration; the solid residue can be re-used as raw material in steelworks.

Cementation is a known process described in Kirk-Othmer (IV Ed.) vol. 25 p. 794 and is performed in reactors at room temperature.

A purified solution is obtained containing zinc and manganese in an ionic form, which is sent to the next stage (4) of separation.

### (4) Zinc and manganese separation stage

The zinc and manganese are separated by following two different strategies depending on whether the leaching has been performed in one or two stages.

### (4.1) Solution deriving from single-stage leaching

The solution is sent to a liquid-liquid extraction section for separation of the zinc salt. An aprotic apolar organic solvent is used, e.g. linear, cyclic or branched aliphatic hydrocarbon, preferably with carbon atoms C1-C12, and corresponding mixtures, e.g. kerosene, containing an agent able to coordinate the zinc and transfer it from the aqueous phase to the organic phase, in general compounds of an acid nature such as alkylphosphoric acids and alkylphosphinic acids. Di(2-ethylhexyl)phosphoric acid (DEHPA) and di(2,4,4-trimethylpentyl)phosphinic acid, indicated as Cyanex 272, are preferred.

The extraction is performed in conventional extractors such as mixer settlers, centrifuges or other and in general at room temperature. The organic phase will contain the zinc while the manganese will remain in the aqueous phase. The solution containing manganese is treated as described below in point (4.2), while the organic phase containing zinc is treated with a mineral acid aqueous solution, preferably the same acid as used for the leaching, sulphuric acid is preferred in particular, to re-extract the zinc in the aqueous phase and recover the organic solvent which is re-circulated, re-using it in the liquid-liquid extraction phase. (In this way the consumption of reagents is minimum: they only have to be topped up, as everything is re-circulated inside the plant). The acid aqueous solution containing the zinc is sent to the zinc electrodeposition section, which operates in standard conditions with standard means, as described in Kirk-Othmer (IV Ed.) vol. 25 p. 805-808 or in Ullmann's (V Ed.) vol. A28 p. 525-526 where, in addition to the formation of metallic Zn, the acid is re-obtained, which is re-sent to the leaching section, after concentration if necessary, and/or to the zinc extraction section to be re-used.

### (4.2) Solutions deriving from two-stage leaching

The first solution, containing zinc and manganese, is treated by electrodeposition in standard conditions and with standard means, as described in Kirk-Othmer (IV Ed.) vol. 25 p. 805-808 or in Ullmann's (V Ed.) vol. A28 p. 525-526, according to the procedures described in point (4.1). Metallic Zn and MnO₂ are obtained, which can be sent to the production of new batteries, and the acid solution, which is recycled as above.

The second solution, containing manganese, can be electrochemically treated and the manganese can be recovered by electrodeposition with production of MnO₂ (the process is known and described in Kirk-Othmer (IV Ed.) vol. 15 p. 1013-1017 or in Ullmann's (V Ed.) vol. A16 p.128, indicated as EMD) suitable for the production of batteries. Also in this case the regenerated acid solution is re-conveyed to the respective utilisation sections.

Alternatively to the electrochemical method, the second solution containing manganese can be treated chemically with oxidants of various types such as air, permanganate or alternatively nitric acid, chlorates etc., or preferably H₂O₂, in conditions which are within the capacity of a person skilled in the art. Also in this case MnO₂ (indicated as CMD) is produced, suitable for the production of batteries.

### (5) Stage for treatment of the solutions to be re-circulated

The solutions to be treated for recirculation in the plant derive from the pre-treatment section (1) and from the separation section (4), and are treated as follows:
(5.1) Liquid effluents deriving from the pre-treatment consist substantially of aqueous solutions containing the electrolyte, in general KOH. The waste is sent to a concentration process, advantageously performed by reverse osmosis in conditions known to a person skilled in the art, e.g. pressure in the range 10-200 atm. The material retained (high pressure side of the membrane) is substantially a concentrated solution of KOH, to be re-used for the production of new batteries in the specific manufacturing process and/or re-introduced onto the market. The permeate (low pressure side) is water with a very low salt content, re-usable as process water.
(5.2) Liquid effluents originating from the phase of Zn and Mn separation and Zn and Mn electrodeposition and from the CMD process
(5.2.1) The electrodeposition solutions are re-circulated as above, e.g. to the leaching section, preferably after concentration by reverse osmosis.
(5.2.2) The solutions coming from the CMD production section can be fully re-circulated to the leaching section if air, H₂O₂ or permanganate are used, after concentration if necessary, e.g. by reverse osmosis. If other types of oxidants are used, a further purification stage will be necessary.

The process of the invention can be performed in a plant comprising the following sections (or stages), as illustrated in Fig. 1:
(1) pre-treatment, comprising means for crushing; means for riddling; means for magnetic separation, induced current separation and means for collection of the materials generated; washing tanks and/or reactors;
(2) leaching, comprising reactors provided with agitation devices if necessary; means for feeding the reagents; means for recirculation and means for filtration;
(3) purification, comprising reactors provided with agitation devices if necessary; means for feeding the reagents; means for recirculation and means for filtration;
(4) separation of zinc and manganese comprising reactors provided with agitation devices if necessary; means for feeding the reagents; devices and means for liquid-liquid extraction and re-extraction of the extracts; devices and means for electrodeposition; means for recirculation and means for filtration;
(5) treatment of the solutions to be re-circulated comprising devices and means for concentration, in particular membrane devices for filtration, in particular filtration by reverse osmosis; means for feeding the reagents; means for recirculation;
(6) battery production plant.

The process can be automated and the various stages can constitute program steps for a computer, hence the entire process can be controlled and optimised by computer. The program can also be recorded on means that can be used via a computer. The scope of the invention therefore extends to said program and to the means on which said program is recorded.

Process, plant and electronic processing are within the capacity of a person skilled in the art who, reading the present description and using his experience, is able to identify the most suitable conditions and means for producing them.

The process and the plant of the invention achieve the objective of creating a closed cycle in which the main components of the flat batteries (steel, zinc, manganese, electrolytic solution) are recovered as products that can be used for the production of new batteries, optimising consumption of the reagents which are regenerated and/or concentrated for recirculation to the plants.

In particular, if sulphuric acid is used, it is regenerated in the process itself with practically zero net consumption.

The only reagents consumed are the carbohydratic reducing agent, deriving from industrial waste, and the oxidant H₂O₂, which are transformed into non-harmful products, mainly H₂O, recyclable carbon products and CO₂.

No polluting waste is produced at the plant outlet.

The invention will now be illustrated by means of a non-limiting example.

### Example 1

A sample of alkaline batteries of different sizes was ground by means of an impact crusher. The coarse fraction was separated from the fine fraction by sieving. The fine fraction was washed with water.

A sample of 10 g taken from the fine fraction was leached with 100 ml of sulphuric acid 3 M at 80°C for 3 hours. The solid residue was separated from the solution, washed and dried. The weight of the solid residue was 1.76 g. The sample examined by X-ray consisted of ?-MnO₂ and graphite, in a form such that it could be directly recovered for the production of other batteries.

The solution (leach) containing Zn in a concentration equal to 14.5 g/l and Mn in a concentration equal to 6.4 g/l underwent electrolysis. The electrodes used were: work electrode consisting of Pt mesh, counter electrode consisting of Pt spiral, saturated calomel reference electrode (SCE). The pH of the solution was equal to 0.15. The electrolysis was conducted at 95°C for two hours setting a cell potential of -2.6 V. A deposit of ε-MnO₂ was obtained, recovering 97% of the Mn: faradic yield η=48%. After adjustment of the pH to 4 with NaOH the electrolysis was performed applying a cell potential of 3.8 V for two hours, obtaining Zn recovery equal to 98.5% with η= 72.4%.

## Claims

1. Process for the treatment of run-down batteries of the zinc/manganese type comprising, in a relationship of cooperation, the following stages:
(i) pre-treatment comprising a first crushing operation, subsequent riddling to a size of approximately 12-1.6 mm to obtain a coarse fraction and a fine fraction, the fine fraction undergoing washing with water and being sent to the subsequent leaching stage;
(ii) leaching, to be performed by placing the washed fine fraction as per stage
(i) in contact with an acid solution in the presence of a reducing agent in order to obtain manganese and zinc in an ionic form in the acid solution and a solid material consisting substantially of carbon residue, the reducing agent being chosen from the group of monosaccharides, oligosaccharides, polysaccharides and corresponding mixtures;
(iii) purification, if necessary, of said acid solution containing zinc and manganese by means of cementation and conveying of said purified acid solution to the subsequent separation stage;
(iv) separation of zinc and manganese by liquid-liquid extraction process performed on the (purified) acid solution, the extraction being performed with an aprotic apolar organic solvent containing an agent able to coordinate the zinc and transfer it from the aqueous phase to the organic phase, separating it from the manganese which remains in the aqueous phase, said organic phase being further treated with an acid aqueous solution to re-extract the zinc in the aqueous phase, the aqueous solutions thus obtained and containing separately zinc and manganese being then treated electrolytically to obtain metallic Zn, MnO₂ and free acid.

2. Process according to claim 1 comprising a further stage (v) for treatment of the washing water coming from stage (i) and the acid solutions coming from the electrolytic treatment as per stage (iv) for the recovery of reagents and water, said treatment (v) being a purification and concentration treatment performed with membrane filters.

3. Process according to claims 1 and 2 in which the grinding is performed at room temperature.

4. Process according to claims 1 and 2 in which the grinding is performed at a temperature from -30° to -110°C.

5. Process according to claims 1-4 further comprising a stage (vi) of production of batteries from materials coming from stages (i) to (v)

6. Process according to claims 1-5 in which the coarse fraction undergoes magnetic separator operations to separate the steel and electric separation to separate the non-ferrous metals.

7. Process according to claims 1-6 in which the acid used in stages (ii) and (iv) is sulphuric acid.

8. Process according to claims 1-7 in which the monosaccharides are chosen from: polyhydroxylated ketones and aldehydes comprising from 3 to 7 carbon atoms and corresponding derivatives in which the CHOH group has been substituted by the CH₂ group.

9. Process according to claim 8 in which the monosaccharides are chosen from the group of: glucose, fructose, mannose, galactose and in general hexose, pentose and triose sugars, which come from polysaccharide hydrolysis processes.

10. Process according to claims 1-7 in which the oligosaccharides are chosen from the group of: carbohydrates comprising from 2 to 10 units of monosaccharide, linked by glycosidic bonds.

11. Process according to claim 10 in which the oligosaccharides are chosen from the group of: lactose, cellobiose, sucrose and maltose.

12. Process according to claims 1-7 in which the polysaccharides are chosen from carbohydrates comprising over 10 units of monosaccharide.

13. Process according to claim 12 in which the polysaccharides are chosen from cellulosic products in general, such as paper mill residues, molasses, starch, whey, olive vegetation water and related products of any hydrolysis.

14. Process according to claims 1-13 in which the reducing agent is chosen from the waste produced by the agroindustrial sector and the paper industry.

15. Process according to claims 1-14 in which the leaching is performed in one single stage dispersing the washed solid coming from stage (i) in an acid solution in which the reducing agent has been previously added, at the end of the reduction the solution containing zinc and manganese in an ionic form being separated from a solid, consisting essentially of carbon residue, said solution then undergoing cementation if necessary to eliminate metals more electropositive than zinc, the separation of zinc from manganese being performed by means of electrolyte treatment, obtaining metallic Zn, MnO₂ and free acid.

16. Process according to claims 1-15 in which for the liquid-liquid extraction an aprotic apolar organic solvent is used containing an agent able to coordinate the zinc and transfer it from the aqueous phase to the organic phase.

17. Process according to claim 16 in which the organic solvent is chosen from linear, cyclic or branched aliphatic hydrocarbons with C₁-C₁₂ carbon atoms and corresponding mixtures.

18. Process according to claims 16-17 in which the organic solvent is kerosene.

19. Process according to claims 16-18 in which the agent able to coordinate the zinc is an acid compound chosen from the compounds of alkylphosphoric acid and alkylphosphinic acid.

20. Process according to claim 19 in which the acid compound is chosen from di(2-ethylhexyl)phosphoric acid and di(2,4,4-trimethylpentyl)phosphinic acid.

21. Process according to claims 1-20 in which the leaching is performed in two stages, the first of which is conducted by dispersing in acid the washed solid coming from stage (i) obtaining zinc and manganese in an ionic form in acid solution and a precipitate which is removed from said solution, the latter undergoing electrolysis to obtain metallic Zn, MnO₂ and a regenerated acid solution, the precipitate removed being dissolved in an acid solution in the presence of a reducing agent in order to obtain an acid solution containing manganese in an ionic form and a precipitate, consisting substantially of carbon residue.

22. Process according to claim 21 in which the manganese present in an ionic form in the acid solution coming from the reducing treatment is recovered by electrodeposition, with the production of MnO₂ and regenerated acid.

23. Process according to claim 21 in which the manganese present in an ionic form in the acid solution coming from the reducing treatment is recovered chemically by treating with an oxidising agent chosen from permanganate, nitric acid, chlorates, H₂O₂, to obtain MnO₂.

24. Process according to claim 23 in which the oxidising agent is chosen from permanganate and H₂O₂.

25. Process according to claims 6 and 15 in which the steel and products coming from cementation are used in the steel and iron industry and in steelworks.

26. Process according to claims 1-25 in which the acid aqueous solutions coming from the electrolytic treatment performed in stages (iv) are re-conveyed to the leaching section, after concentration if necessary according to the treatment of stage (v).

27. Process according to claims 1-26 in which the organic solvent used in stage (iv) is re-circulated to the same stage after re-extraction of the zinc.

28. Process according to claims 1-27 in which the liquid effluent deriving from the pre-treatment (i), consisting substantially of aqueous solutions containing KOH, is sent to a concentration process performed with membranes by reverse osmosis, obtaining a retained part consisting substantially of a concentrated solution of KOH, to be re-used for the production of new batteries, and a permeate consisting of water that can be re-used as process water.

29. Process according to claims 1-28 in which metallic Zn and MnO₂ obtained from the electrolysis performed in stage (iv) are used for the production of batteries.

30. Process according to claims 1-29 in which the free acid obtained from the electrolytic treatment is re-circulated to stage (iv) to be re-used.

31. Process according to claims 1-30 in which the solid carbon residue deriving from the reduction as per stage (ii) is used for the production of fuel from waste or in the production of new batteries.

32. Process according to claim 24 in which the solution coming from the chemical production of MnO₂ is re-circulated to the leaching section (ii), after any concentration by reverse osmosis.

33. Process according to the preceding claims in which the various stages constitute program steps for a computer.

## Patentansprüche

1. Verfahren zur Behandlung von verbrauchten Batterien des Typs Zink/Mangan, aufweisend, in einer Kooperationsbeziehung, die folgenden Stufen:
(i) Vorbehandlung, aufweisend einen ersten Zerkleinerungsvorgang, nachfolgendem Sieben auf eine Grösse von ungefähr 1.2-1.6 mm um eine Grobfraktion und eine Feinfraktion zu erhalten, wobei die Feinfraktion einer Waschung mit Wasser unterzogen wird und zu der nachfolgenden Auslaugungsstufe befördert wird;
(ii) Auslaugen, welches dadurch ausgeführt wird, indem die gewaschene Feinfraktion gemäss Stufe (i) in Kontakt mit einer Säurelösung in Anwesenheit eines Reduktionsmittels gebracht wird, um Mangan und Zink in einer ionischen Form in der Säurelösung und einen Feststoff, welcher im Wesentlichen aus Kohlenstoffrückständen besteht, zu erhalten, wobei das Reduktionsmittel aus der Gruppe von Monosacchariden, Oligosacchariden, Polysacchariden und entsprechenden Mischungen ausgewählt wird;
(iii) Reinigung, falls notwendig, der besagten Säurelösung, welche Zink und Mangan aufweist, mittels Zementierung und Beförderung der besagten gereinigten Säurelösung zu der nachfolgenden Trennungsstufe;
(iv) Trennung von Zink und Mangan mittels eines Flüssig-Flüssig Extraktionsverfahrens, welches an der (gereinigten) Säurelösung durchgeführt wird, wobei die Extraktion mittels eines aprotischen unpolaren organischen Lösungsmittels erfolgt, welches ein Mittel aufweist, das dazu geeignet ist, Zink zu koordinieren und ihn von der wässrigen Phase in die organische Phase zu transferieren, ihn vom Mangan, welches in der wässrigen Phase bleibt, zu trennen, wobei die besagte organische Phase weiter mit einer sauren wässrigen Lösung behandelt wird um den Zink erneut in der wässrigen Phase zu extrahieren, wobei die so erhaltenen wässrigen Lösungen, welche Zink und Mangan getrennt aufweisen, dann elektrolytisch behandelt werden um metallisches Zn, MnO₂ und freie Säure zu erhalten.

2. Verfahren gemäss Anspruch 1, aufweisend eine weitere Stufe: (v) zur Behandlung des Waschwassers, welches von der Stufe (i) stammt, und der Säurelösungen, welche von der elektrolytischen Behandlung gemäss Stufe (iv) stammen, zur Rückgewinnung der Reagenzien und Wasser, wobei die besagte Behandlung (v) eine Reinigungs- und Konzentrierungsbehandlung ist, welche mit Membranfiltern durchgeführt wird.

3. Verfahren gemäss den Ansprüchen 1 und 2, in welchem die Zerkleinerung bei Raumtemperatur durchgeführt wird.

4. Verfahren gemäss den Ansprüchen 1 und 2, in welchem die Zerkleinerung bei einer Temperatur von -30° bis -110°C durchgeführt wird.

5. Verfahren gemäss den Ansprüchen 1-4, weiter aufweisend eine Stufe (vi) der Herstellung von Batterien aus Materialien, welche von den Stufen (i) bis (v) stammen.

6. Verfahren gemäss den Ansprüchen 1-5, in welchem die Grobfraktion Magnetabscheidervorgängen unterzogen wird, um den Stahl abzutrennen und elektrischer Trennung unterzogen wird, um nicht-eisenhaltige Metalle abzutrennen.

7. Verfahren gemäss den Ansprüchen 1-6, in welchem die in den Stufen (ii) und (iv) verwendete Säure Schwefelsäure ist.

8. Verfahren gemäss den Ansprüchen 1-7, in welchem die Monosaccharide ausgewählt werden aus: polyhydroxilierten Ketonen und Aldehyden, welche 3 bis 7 Kohlenstoffatome und entsprechende Derivaten aufweisen, in welchen die CHOH-Gruppe durch eine CH₂-Gruppe substituiert wurde.

9. Verfahren gemäss Anspruch 8, in welchem die Monosaccharide ausgewählt werden aus der Gruppe der: Glukose, Fruktose, Mannose, Galaktose und im allgemeinen Hexose, Pentose und Triose-Zuckern, welche von Polysaccharid-Hydrolyse-Verfahren stammen.

10. Verfahren gemäss den Ansprüchen 1-7, in welchem die Oligosaccharide ausgewählt werden aus der Gruppe der: Kohlenhydrate, welche 2 bis 10 Einheiten von Monosacchariden aufweisen, welche über Glykosidbindungen verknüpft sind.

11. Verfahren gemäss Anspruch 10, in welchem die Oligosaccharide ausgewählt werden aus der Gruppe der: Laktose, Zellobiose, Saccharose und Maltose.

12. Verfahren gemäss den Ansprüchen 1-7, in welchem die Polysaccharide aus Kohlenhydraten ausgewählt werden, welche mehr als 10 Einheiten von Monosacchariden aufweisen.

13. Verfahren gemäss Anspruch 12, in welchem die Polysaccharide aus allgemeinen Zelluloseprodukten, wie Papierwerkrückbestände, Melasse, Stärke, Molke, Rückstände aus der Olivenölherstellung und sonstigen ähnlichen Hydrolyse-Produkten, ausgewählt werden.

14. Verfahren gemäss den Ansprüchen 1-13, in welchem das Reduktionsmittel aus dem Abfall gewählt wird, welcher im Agrarindustriesektor und in der Papierindustrie produziert wird.

15. Verfahren gemäss den Ansprüchen 1-14, in welchem das Auslaugen in einer einzelnen Stufe durchgeführt wird, der gewaschene Feststoff der Stufe (i) in einer Säurelösung dispergiert wird, in welche das Reduktionsmittel zuvor zugegeben wurde, wobei die Lösung am Ende der Reduktion Zink und Mangan in einer ionischen Form getrennt von einem Feststoff, welcher im Wesentlichen aus Kohlenstoffrückständen besteht, aufweist, wobei die besagte Lösung dann einer Zementierung unterzogen wird falls nötig, um elektropositivere Metalle als Zink zu eliminieren, wobei die Trennung des Zinks vom Mangan mittels einer Elektrolytbehandlung erfolgt, wobei metallisches Zn, MnO₂ und freie Säure erhalten werden.

16. Verfahren gemäss den Ansprüchen 1-15, in welchem für die Flüssig-Flüssig-Extraktion ein aprotisches unpolares organisches Lösungsmittel verwendet wird, welches ein Mittel aufweist, das dazu geeignet ist, den Zink zu koordinieren und ihn von der wässrigen Phase in die organische Phase zu transferieren.

17. Verfahren gemäss Anspruch 16, in welchem das organische Lösungsmittel aus linearen, zyklischen oder verzweigten aliphatischen Kohlenwasserstoffen mit C₁-C₁₂ Kohlenstoffatomen und entsprechenden Mischungen ausgewählt wird.

18. Verfahren gemäss den Ansprüchen 16-17, in welchem das organische Lösungsmittel Kerosin ist.

19. Verfahren gemäss den Ansprüchen 16-18, in welchem das Mittel, welches dazu geeignet ist, den Zink zu koordinieren, eine Säureverbindung ausgewählt aus den Verbindungen der Alkylphosphorsäure und Alkylphosphinsäure ist.

20. Verfahren gemäss Anspruch 19, in welchem die Säureverbindung aus Di(2-ethylhexyl)phosphorsäure und Di(2, 4, 4-trimethylpentyl)phosphinsäure ausgewählt wird.

21. Verfahren gemäss den Ansprüchen 1-20, in welchem die Auslaugung in zwei Stufen durchgeführt wird, von denen die erste durch Dispergieren des gewaschenen Feststoffs stammend aus Stufe (i) in Säure durchgeführt wird, wobei Zink und Mangan in einer ionischen Form in Säurelösung und ein Abscheidungsstoff, welcher von besagter Lösung entfernt wird, erhalten werden, wobei letzterer einer Elektrolyse unterzogen wird um metallisches Zn, MnO₂ und eine regenerierte Säurelösung zu erhalten, wobei der entfernte Abscheidungsstoff in einer Säurelösung in Gegenwart eines Reduktionsmittels gelöst wird, um Mangan in einer ionischen Form und einen Abscheidungsstoff, welcher im Wesentlichen aus Kohlenstoffrückständen besteht, zu erhalten.

22. Verfahren gemäss Anspruch 21, in welchem das in einer ionischen Form in der Säurelösung vorliegende Mangan, welches aus der Reduktionsbehandlung stammt, durch Galvanotechnik regeneriert wird, mit der Herstellung von MnO₂ und regenerierter Säure.

23. Verfahren gemäss Anspruch 21, in welchem das in einer ionischen Form in der Säurelösung vorliegende Mangan, welches aus der Reduktionsbehandlung stammt, durch eine Behandlung mit einem Oxidationsmittel ausgewählt aus Permanganat, Salpetersäure, Chloraten, H₂O₂, chemisch regeneriert wird, um MnO₂ zu erhalten.

24. Verfahren gemäss Anspruch 23, in welchem das Oxidationsmittel aus Permanganat und H₂O₂ ausgewählt wird.

25. Verfahren gemäss den Ansprüchen 6 und 15, in welchem der Stahl und Produkte stammend aus der Zementierung in der Stahl- und Eisenindustrie und in Stahlwerken verwendet werden.

26. Verfahren gemäss den Ansprüchen 1-25, in welchem die sauren wässrigen Lösungen stammend von der elektrolytischen Behandlung, welche in Stufe (iv) durchgeführt wird, in die Auslaugungssektion zurückgeführt werden, falls nötig nach einer Konzentrierung gemäss der Behandlung von Stufe (v).

27. Verfahren gemäss den Ansprüchen 1-26, in welchem das organische Lösungsmittel, welches in Stufe (iv) verwendet wird, nach der erneuten Extraktion des Zinks zu derselben Stufe zurückgeführt wird.

28. Verfahren gemäss den Ansprüchen 1-27, in welchem die flüssige Ableitung, welche der Vorbehandlung (i) entstammt, im Wesentlichen aus KOH aufweisenden wässrigen Lösungen besteht, zu einem Konzentrierungsverfahren gesendet wird, welches mit Membranen durch Umkehr-Osmose durchgeführt wird, wobei ein zurückbehaltener Teil, welcher im Wesentlichen aus einer konzentrierten Lösung von KOH besteht, erhalten wird, welcher für die Herstellung von neuen Batterien wiederverwendet wird, und ein Permeat, welches aus Wasser besteht, das als Prozesswasser wiederverwendet werden kann.

29. Verfahren gemäss den Ansprüchen 1-28, in welchem metallisches Zn und MnO₂, welche von der in Stufe (iv) durchgeführten Elektrolyse erhalten werden, für die Herstellung von Batterien verwendet werden.

30. Verfahren gemäss den Ansprüchen 1-29, in welchem die freie Säure, welche von der elektrolytischen Behandlung erhalten wird, der Stufe (iv) zurückgeführt wird um wiederverwendet zu werden.

31. Verfahren gemäss den Ansprüchen 1-30, in welchem der feste Kohlenstoffrückstand, welcher von der Reduktion gemäss Stufe (ii) entstammt, für die Herstellung von Treibstoff aus Abfall oder in der Herstellung von neuen Batterien verwendet wird.

32. Verfahren gemäss Anspruch 24, in welchem die Lösung, welche der chemischen Herstellung von MnO₂ entstammt, nach jeglicher Konzentrierung durch Umkehr-Osmose, zu der Auslaugungssektion (ii) zurückgeführt wird.

33. Verfahren gemäss den vorherigen Ansprüchen, in welchem die unterschiedlichen Stufen Programmierschritte für einen Computer bilden.

## Revendications

1. Procédé pour le traitement de batteries usées du type zinc/manganèse comprenant, dans une relation de coopération, les étapes suivantes :
(i) prétraitement comprenant une première opération de broyage, subséquemment criblage à une taille d'approximativement 1.2 à 1.6 mm pour obtenir une fraction grosse et une fraction fine, la fraction fine subissant un lavage à l'eau et étant acheminée à une étape subséquente de lixiviation ;
(ii) lixiviation, étant effectuée en plaçant la fraction fine lavée conformément à l'étape (i) en contact avec une solution acide en présence d'un agent réducteur de sorte à obtenir du manganèse et du zinc en forme ionique dans la solution acide et un matériel consistant essentiellement de résidu de carbone, l'agent réducteur étant choisi du groupe des monosaccharides, oligosaccharides, polysaccharides et mélanges correspondants ;
(iii) purification, si nécessaire, de ladite solution acide contentant du zinc et manganèse par moyen de cimentation et acheminement de ladite solution acide purifiée à l'étape de séparation subséquente;
(iv) séparation du zinc et manganèse par procédé d'extraction liquide-liquide effectué sur la solution acide (purifiée), l'extraction étant effectuée avec un solvant organique apolaire aprotique contenant un agent capable de coordonner le zinc et de le transférer depuis la phase aqueuse vers la phase organique, de le séparer du manganèse qui reste en phase aqueuse, ladite phase organique étant d'avantage traitée avec une solution aqueuse acide pour ré-extraire le zinc dans la phase aqueuse, la solution aqueuse ainsi obtenue et contenant séparément zinc et manganèse étant alors traitée de manière électrolytique pour obtenir du Zn métallique, MnO₂ et acide libre.

2. Procédé selon la revendication 1, comprenant l'étape additionnelle : (v) pour le traitement de l'eau de lavage émanant de l'étape (i) et des solutions acides émanant du traitement électrolytique conformément à l'étape (iv) pour la récupération de réagents et d'eau, le dit traitement (v) constituant un traitement de purification et concentration effectué avec des membrane de filtration.

3. Procédé selon les revendications 1 et 2 dans lequel le broyage est effectué à température ambiante.

4. Procédé selon les revendications 1 et 2 dans lequel le broyage est effectué à une température de -30° à -100°C.

5. Procédé selon les revendications 1 à 4 comprenant d'avantage une étape de production de batteries (vi) à partir des matériaux émanant des étapes (i) à (v).

6. Procédé selon les revendications 1 à 5 dans lequel la fraction grosse subit des opérations de séparation magnétique pour séparer l'acier et une séparation électrique pour séparer les métaux non ferreux.

7. Procédé selon les revendications 1 à 6 dans lequel l'acide utilisé dans les étapes (ii) et (iv) est l'acide sulfurique.

8. Procédé selon les revendications 1 à 7 dans lequel les monosaccharides sont choisis de ketone polyhydroxylée et aldéhydes comprenant de 3 à 7 atomes de carbone et dérivés correspondants dans lesquels les groupes CHOH ont été substitués par le groupe CH₂.

9. Procédé selon la revendication 8 dans lequel les monosaccharides sont choisis du groupe de glucose, fructose, mannose, galactose et en général hexose, pentose et triose, qui émanent du procédé d'hydrolyse de polysaccharide.

10. Procédé selon les revendications 1 à 7 dans lequel les oligosaccharides sont choisis du groupe de carbohydrates comprenant de 2 à 10 unités de monosaccharide, reliés par liaison glycosidique.

11. Procédé selon la revendication 10 dans lequel les oligosaccharides sont choisis du groupe de lactose, cellobiose, sucrose et maltose.

12. Procédé selon les revendications 1 à 7 dans lequel les polysaccharides sont choisi de carbohydrates comprenant au-delà 10 unités de monosaccharide.

13. Procédé selon la revendication 12 dans lequel les polysaccharides sont choisis de produits cellulosiques en général, comme par exemple des résidus d'usine de papier, mélasses, amidons, lactosérum, l'eau de pressage d'olives et produits apparentés de quelconque hydrolyse.

14. Procédé selon les revendications 1 à 13 dans lequel l'agent réducteur est choisi de déchets produits par le secteur agro-industriel et l'industrie de papier.

15. Procédé selon les revendications 1 à 14 dans lequel la lixiviation est effectuée en une étape singulière en dispersant le solide lavé émanant de l'étape (i) dans une solution acide dans laquelle l'agent réducteur a été ajouté préalablement, à la fin de la réduction la solution contenant du zinc et manganèse en une forme ionique étant séparées d'un solide, consistant essentiellement de résidu de carbone, ladite solution en suite subissant une cimentation, si nécessaire, pour éliminer des métaux plus électropositifs que le zinc, la séparation du zinc du manganèse étant effectuée par moyens de traitement de manière électrolytique, obtenant du zinc métallique, MnO₂ et de l'acide libre.

16. Procédé selon les revendications 1 à 15 dans lequel pour l'extraction liquide-liquide, un solvant organique apolaire aprotique est utilisé contenant un agent capable de coordonner le zinc et de le transférer depuis la phase aqueuse vers la phase organique.

17. Procédé selon la revendication 16 dans lequel le solvant organique est choisi d'hydrocarbure linéaire, cyclique ou ramifiée ayant C₁ à C₁₂ atome de carbone et mélanges correspondants.

18. Procédé selon les revendications 16 à 17 dans lequel le solvant organique est le kérosène.

19. Procédé selon les revendications 16 à 18 dans lequel l'agent capable de coordonner le zinc est un composant acide choisi des composants d'acide alkylposphorique et acide alkylphosphinique.

20. Procédé selon la revendication 19 dans lequel le composant acide est choisi d'acide di(2-éthylhexyl)phosphorique et acide di(2,4,4-triméthylpentyl) posphinique.

21. Procédé selon les revendications 1 à 20 dans lequel la lixiviation est effectuée en deux étapes, la première desquelles est conduite en dispersant le solide lavé émanant de l'étape (i) 1 dans de l'acide, obtenant du zinc et manganèse en forme ionique dans une solution acide, et un précipité qui est enlevé de ladite solution, ce dernier subissant une électrolyse pour obtenir du zinc métallique, MnO₂ et une solution acide régénérée, le précipité enlevé étant dissout dans une solution acide en présence d'un agent réducteur de sorte à obtenir une solution acide contenant du manganèse en forme ionique et un précipité, consistant essentiellement de résidu de carbone.

22. Procédé selon la revendication 21 dans lequel le manganèse présent en forme ionique dans la solution acide émanant du traitement réducteur est récupéré par électrodéposition, avec la production de MnO₂ et acide régénéré.

23. Procédé selon la revendication 21 dans lequel le manganèse présent en forme ionique dans la solution acide émanant du traitement réducteur est récupéré chimiquement par traitement avec un agent oxydant choisi du permanganate, acide nitrique, chlorate, H₂O₂, pour obtenir MnO₂.

24. Procédé selon la revendication 23 dans lequel l'agent oxydant est choisi de permanganate et H₂O₂.

25. Procédé selon les revendications 6 et 15 dans lequel l'acier et les produits émanant de la cimentation sont utilisés dans l'industrie de l'acier et du fer et dans des aciéries.

26. Procédé selon les revendications 1 à 25 dans lequel les solutions acides aqueuses émanant du traitement de manière électrolytique effectué dans l'étape (iv) sont réacheminées à la section de lixiviation, après concentration, si nécessaire, selon le traitement de l'étape (v).

27. Procédé selon les revendications 1 à 26 dans lequel le solvant organique utilisé dans l'étape (iv) est ré-circulé vers la même étape après ré-extraction du zinc.

28. Procédé selon les revendications 1 à 27 dans lequel l'effluant liquide dérivé du prétraitement (i), consistant essentiellement de solutions aqueuses contenant KOH, est acheminé vers un procédé de concentration effectué avec des membranes par osmose inversé, obtenant une partie retenue consistant essentiellement de solution concentrée de KOH, destinée à être réutilisée pour la production de nouvelles batteries, et le perméat consistant d'eau peut être réutilisé comme eau de procédé.

29. Procédé selon les revendications 1 à 28 dans lequel le zinc métallique et MnO₂ obtenus de l'électrolyse effectuée à l'étape (iv) sont utilisés pour la production de batteries.

30. Procédé selon les revendications 1 à 29 dans lequel l'acide libre obtenu à partir du traitement électrolytique est ré-circulé à l'étape (iv), pour être ré-utilisé.

31. Procédé selon les revendications 1 à 30 dans lequel le résidu de carbone solide dérivé de la réduction correspondant à l'étape (ii) est utilisé pour la production de carburant à partir de déchets ou dans la production de nouvelles batteries.

32. Procédé selon la revendication 24 dans lequel la solution émanant de la production chimique de MnO₂ est ré-circulée vers la section de lixiviation (ii) après quelconque concentration par osmose inversé.

33. Procédé selon les revendications précédentes dans lequel les différentes étapes constituent des étapes de programme pour un ordinateur.
